## Europäisches Patentamt

## European Patent Office

## Office européen des brevets

(19)

(11) Veröffentlichungsnummer: **0 182 336**
**B1**

(12) **EUROPÄISCHE PATENTSCHRIFT**

(45) Veröffentlichungstag der Patentschrift:
**01.06.88**

(51) Int. Cl.⁴: **F 16 D 65/56**

(21) Anmeldenummer: **85114630.8**

(22) Anmeldetag: **18.11.85**

(54) **Bremsbetätigungsvorrichtung.**

(30) Priorität: **20.11.84 DE 8434025 U**

(43) Veröffentlichungstag der Anmeldung:
**28.05.86 Patentblatt 86/22**

(45) Bekanntmachung des Hinweises auf die Patenterteilung:
**01.06.88 Patentblatt 88/22**

(84) Benannte Vertragsstaaten:
**DE FR GB IT**

(56) Entgegenhaltungen:
**EP - A - 0 036 568**
**EP - A - 0 103 512**
**WO - A - 80/01370**
**DE - A - 2 325 296**
**DE - A - 2 330 949**
**DE - A - 3 220 283**
**FR - A - 2 222 573**
**FR - A - 2 277 275**

(73) Patentinhaber: **LUCAS INDUSTRIES public limited company, Great King Street, Birmingham, B19 2XF West Midlands (GB)**

(72) Erfinder: **Erben, Ralf, Sebastian-Bach-Strasse 4a, D-5400 Koblenz (DE)**
Erfinder: **Walden, Michael Felix Maria, Auf der Jaugel 15, D-5470 Andernach-Eich (DE)**

(74) Vertreter: **Wuesthoff, Franz, Dr.-Ing. et al, Patentanwälte Wuesthoff -v. Pechmann-Behrens-Goetz Schweigerstrasse 2, D-8000 München 90 (DE)**

## Beschreibung

Die Erfindung betrifft eine Bremsbetätigunsvorrichtung mit einem Zylindergehäuse, in dem ein hydraulisch betätigbarer Kolben und ein mechanisch betätigbarer Stössel geführt sind, zwischen denen zur Übertragung einer mechanischen Betätigungskraft die Nachstellvorrichtung angeordnet ist, welche eine Spindel und zwei für sich jeweils selbsthemmungsfreie Gewindepaarungen unterschiedlicher Steigung sowie eine Kupplung aufweist, die bei Betätigung des Stössels zur Anlage kommt und dabei die Drehung der Gewindepaarungen verhindert.

Eine solche Bremsbetätigungsvorrichtung ist aus der DE A-32 20 283 bekannt. Dort ist zwischen dem Kolben und dem Stössel eine hohle erste Spindel angeordnet, innerhalb derer gleichachsig eine zweite Spindel angeordnet ist, welche mit dem Kolben durch eine selbsthemmungsfreie Gewindepaarung verschraubt ist. Die Kupplung wird dort durch auf den beiden Spindeln vorgesehene Kupplungsflächen gebildet. Bei dieser Vorrichtung bleiben die zweite Spindel und eine mit der ersten Spindel verschraubte Mutter nach oftmaliger Betätigung der Bremse im wesentlichen in der vorgegebenen Lage, während der Kolben mit einer mit der zweiten Spindel verschraubten Mutter mit zunehmendem Verschleiss der Bremsbeläge aus dem Zylindergehäuse herauswandert.

Dieser Verschiebung des Kolbens muss die Überdeckung der Gewinde zwischen der zweiten Spindel und der zugehörigen Mutter Rechnung tragen.

Bei der aus der DE A-32 20 283 bekannten Nachstellvorrichtung ist die Einstellung des Kupplungsspieles abhängig von der Länge der ersten Spindel, so dass eine maschinelle, direkte und genaue Einstellung des Kupplungsspieles erschwert ist.

Der Erfindung liegt die Aufgabe zugrunde, eine selbsttätige Nachstellvorrichtung der eingangs beschriebenen Gattung derart weiterzubilden, dass bei vollständiger Abnutzung der Bremsbeläge noch eine ausreichende Gewindeüberdeckung gewährleistet ist und dass die Einstellung des Kupplungsspieles mit guter Genauigkeit maschinell durchführbar ist. Auch sollen die bei mechanischer Bremsbetätigung auftretenden Bewegungswiderstände und die Anzahl der erforderlichen Bauteile insgesamt möglichst gering gehalten werden.

Die Aufgabe wird erfindungsgemäss dadurch gelöst, dass auf oder in der Spindel zwei einander schneidende Gewinde ausgeformt sind, auf oder in welche eine Nachstellmutter bzw. eine Klemmhülse geschraubt sind, und dass die Kupplung durch die Nachstellmutter und die Klemmhülse gebildet wird.

Nach der Erfindung bleiben also die Nachstellmutter und die Klemmhülse bei Abnutzung der Beläge im wesentlichen in der vorgegebenen Lage, während der Kolben mit der Spindel aus dem Gehäuse wandert. Die Gewindeüberdeckung bleibt deshalb auch bei Abnutzung der Bremsbeläge gewährleistet.

Darüberhinaus weist die erfindungsgmässe Nachstellvorrichtung auch alle Vorteile der aus der DE A-32 20 283 bekannten Vorrichtung auf. Bei mechanischer Bremsbetätigung und geschlossener Kupplung verklemmen sich die beiden Gewindepaarungen gegenseitig. Infolge dieser Verklemmung können sich die drehbaren Teile der beiden Gewindepaarungen, also die Klemmhülse und die Nachstellmutter, nicht relativ zum Kolben verdrehen. Bei geschlossener Kupplung wird somit durch die Nachstellvorrichtung kein Drehmoment erzeugt. Insgesamt verhält sich die Nachstellvorrichtung bei mechanischer Bremsbetätigung wie ein starres Zwischenglied zwischen dem Stössel und dem Kolben. Wird die mechanische Bremsbetätigungskraft und somit die Kupplung aufgehoben, so gewinnen die beiden Gewindepaarungen ihre Unabhängigkeit zurück. Bei unbetätigter mechanischer Bremse drehen sich deshalb die Klemmhülse und die Nachstellmutter frei auf der Spindel bei Bewegung des Kolbens relativ zum Zylindergehäuse.

Gemäss der Erfindung werden die zwei Gewindepaarungen durch nur drei Bauteile erzeugt, nämlich die mit zwei Gewinden versehene Spindel und die darauf geschraubte Nachstellmutter sowie die Klemmhülse. Die unterschiedlichen Gewindepaarungen lassen sich in verschiedener Weise verwirklichen. Bevorzugt wird das eine Gewindepaar linksgängig und das andere Gewindepaar rechtsgängig ausgeformt. Auch lassen sich die Steigungswinkel der Gewindepaarungen variieren.

Bevorzugt ist die Kupplung als Konuskupplung ausgebildet, wobei die Nachstellmutter mit einem konischen Vorsprung versehen ist, welcher in die komplementär ausgebildete Klemmhülse eingreift. Die Klemmhülse umfasst dabei die Nachstellmutter sowie das dem Stössel zugekehrte Ende der Spindel, so dass sie mit einer Stirnfläche am Stössel anliegt. Um das Reibungsmoment zwischen der Nachstellmutter und dem Stössel gering zu halten, ist in einer bevorzugten Ausgestaltung der Erfindung entweder die Stirnfläche der Nachstellmutter oder des Stössels ballig ausgeformt.

Bei einer bevorzugten Ausführungsform der Erfindung werden die Reibmomente zwischen der Nachstellmuter sowie der Klemmhülse und den nicht drehenden Teilen dadurch reduziert, dass beide jeweils axial durch ein Wälzlager abgestützt sind.

Ein Ausführungsbeispiel der Erfindung wird nachfolgend anhand einer schematischen Zeichnung beschrieben. Dabei zeigt:

Fig. 1 einen Längsschnitt durch eine erfindungsgemässe kombinierte hydraulische und mechanische Bremsbetätigungsvorrichtung einer Schwimmsattel-Scheibenbremse für Kraftfahrzeuge und

Fig. 2 einen vergrösserten Ausschnitt aus Fig. 1.

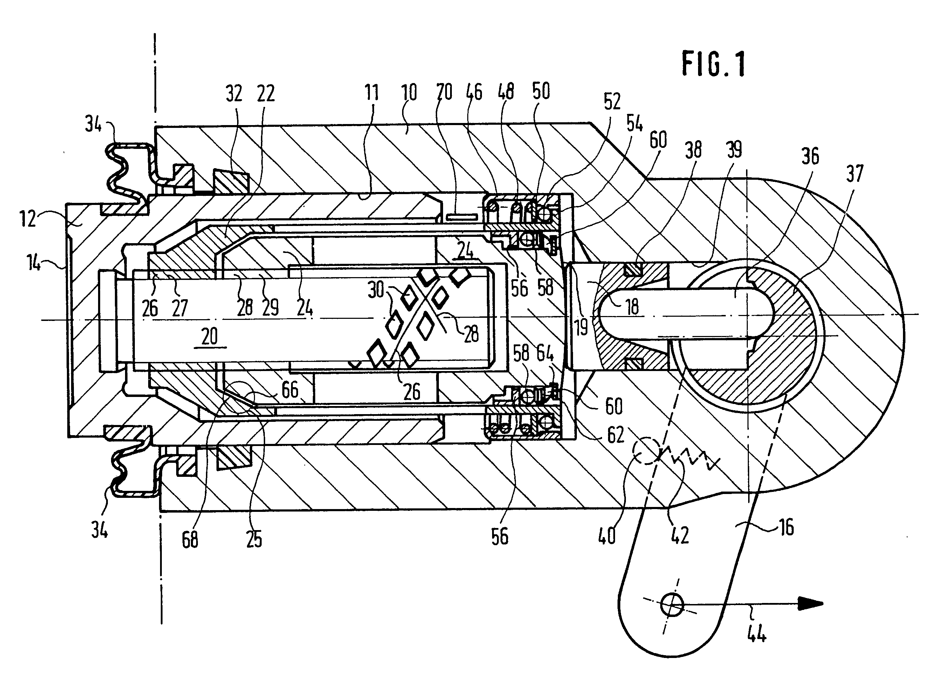

Gemäss Fig. 1 weist die Bremsbetätigunsvorrichtung ein Zylindergehäuse 10 auf, das an einem Schwimmsattel einer Teilbelagscheibenbremse befestigt oder mit ihm einstückig ausgebildet sein kann. In einer Zylinderbohrung 11 des Zylindergehäuses 10 ist ein hohler Kolben 12 geführt. Der Kolben 12 hat eine Stirnfläche 14, mit der er im Einbauzustand an einer Trägerplatte einer Bremsbacke (nicht gezeigt) anliegt, die er bei Betätigung der Vorrichtung gegen eine Bremsscheibe (nicht gezeigt) andrückt. Für eine hydraulische Bremsbetätigung wird Bremsflüssigkeit durch einen Einlass (nicht gezeigt) in die Zylinderbohrung 11 eingeleitet.

Für eine mechanische Betätigung der Bremse ist am Zylindergehäuse 10 ein Hebel 16 vorgesehen, mit dem ein Stössel 18 in Richtung auf eine am Kolben 12 befestigte Spindel 20 bewegbar ist.

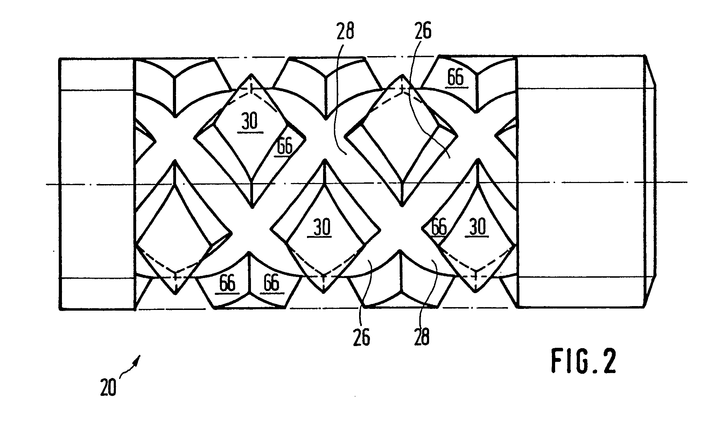

Auf die Spindel 20 sind eine Klemmhülse 22 und eine Nachstellmutter 24 geschraubt. Hierzu ist für die Klemmhülse 22 auf der Spindel 20 ein linksgängiges Aussengewinde 26 vorgesehen, dem ein Innengewinde 27 in der Klemmhülse entspricht. Für die Nachstellmutter 24 ist die Spindel 20 mit einem rechtsgängigen Aussengewinde 28 versehen, dem ein Innengewinde 29 der Nachstellmutter 24 entspricht. Die beiden Gewinde 26 bzw. 28 auf der Spindel 20 kreuzen oder überschneiden einander. Durch das Überschneiden bleiben von den beiden Gewinden 26 und 28 nur Höcker 30 von rautenförmigem Grundriss stehen, die in Fig. 2 genauer dargestellt sind.

Der Kolben 12 trägt, wie üblich, einen Dichtungsring 32, der den Kolben 12 nach jeder Bremsbetätigung in das Zylindergehäuse 10 zurückschiebt. Die Zylinderbohrung 11 ist ausserdem durch eine Dichtungsmanchette 34 gegen Verschmutzung gesichert.

Die Übertragung der mechanischen Bremskraft (Handbremse) auf den Stössl 18 erfolgt über das Druckstück 36, welches exzentrisch an einer Welle 37 befestigt ist, die in einer zur Bohrung 11 senkrecht stehenden Bohrung im Zylindergehäuse 10 angeordnet ist und vom Hebel 16 gedreht wird. Eine Ringdichtung 38 am Stössel 18 dichtet eine Bohrung 39 ab, in welcher der Stössel geführt ist.

Im unbetätigten Zustand liegt der Hebel 16 unter der Wirkung einer ihn mit dem Zylindergehäuse 10 verbindenden Rückstellfeder 42 an einem Anschlag 40. Durch eine mechanische Betätigungskraft in Richtung des Pfeiles 44 wird der Hebel 16 verschwenkt und die Welle 37 gedreht. Entsprechend wird über über das Druckstück 36 eine Kraft (in der Fig. 1 nach links) auf den Stössel 18 und die Nachstellmutter 24 ausgeübt. Die Klemmhülse 22 und die Nachstellmutter 24 sind gemäss Fig. 1 sowohl in ihrem vorderen, vom Stössel 18 abgekehrten Abschnitt als auch im hinteren Abschnitt im Bezug auf das Gehäuse 10 sowie die Spindel 20 abgestützt. Hierzu erstreckt sich sowohl die Klemmhülse 22 als auch die Nachstellmutter 24 über das hintere Ende der Spindel 20 hinaus. Die Abstützung der Klemmhülse 22 gegen das Gehäuse 10 erfolgt über einen Einsatz 46, eine Feder 48, eine Scheibe 50, ein Wälzlager 52 und einen Flansch 54, in dem die Klemmhülse 22 im rückwärtigen Abschnitt endet. In axial entgegengesetzter Richtung, also in Fig. 1 nach rechts, wird die Klemmhülse 22 gehalten durch den Einsatz 56, das Wälzlager 58, die Feder 60, die Scheibe 62, den Sicherungsring 64, die Nachstellmutter 24, den Stössel 18, das Druckstück 36, den Hebel 16, die Feder 42 und den Anschlag 40.

Die Einstellung des Kupplungsspieles, also des axialen Abstandes der die Kupplung 25 bildenden komplementären konischen Flächen 60 und 68 an der Klemmhülse 22 bzw. der Nachstellmutter 24, erfolgt folgendermassen. Zwischen dem Hebel 16 und dem Anschlag 40 wird eine Lehre angebracht, so dass der Stössel 18 um den Betrag nach vorne herausgeschoben wird, der dem gewünschten Kupplungsspiel entspricht. Asserhalb des Zylindergehäuses 10 werden folgende Bauteile zusammengesetzt: die Klemmhülse 22, die Nachstellmutter 24, der Einsatz 46, die Feder 48, die Scheibe 50, das Wälzlager 52, der Einsatz 56, das Wälzlager 58, die Scheibe 62, eine Feder 60 und der Sicherungsring 64. Diese Einheit wird auf ein Rohr 70 aufgeschoben, dessen Innendurchmesser nur wenig grösser ist als der Aussendurchmesser der Klemmhülse 22 und dessen Assendurchmesser kleiner ist als der Innendurchmesser der Feder 48. Das Rohr 70 kann also unter die Feder 48 geschoben werden. Mittels des Rohres 70 wird die Einheit in die Bohrung 11 des Zylindergehäuses eingeführt. Das Rohr 70 wird in die Bohrung gedrückt. Dabei wird über die Scheibe 50 und einen Ansatz an dem Einsatz 46 eine Kraft auf letzteren ausgeübt, durch welche dieser in der passgenauen Bohrung im Gehäuse axial verschoben wird. Der Einsatz 46 wird solange in die Bohrung gepresst, bis das Kupplungsspiel zu Null geworden ist. Das Verschwinden des Kupplungsspieles lässt sich dadurch feststellen, dass ein Kraftanstieg einsetzt, da sich in diesem Zustand die Klemmhülse 22 über die Konuskupplung 25 und die Nachstellmutter 24 am Stössel 18 abstützt. Sodann wird die Lehre zwischen dem Anschlag 40 und dem Hebel 16 entfernt, worauf sich der Hebel 16 unter der Wirkung der Feder 42 gegen den Anschlag 40 bewegt. Dabei wird der Stössel 18 in Fig. 1 nach rechts verschoben, so dass die Feder 6, welche als Wellfeder ausgebildet ist, den das Kupplungsspiel definierenden Abstand zwischen der Klemmhülse 22 und der Nachstellmutter 24 durch Ausdehnung in Axialrichtung erzeugt.

Bei hyrdraulischer Betätigung der Bremse wird der Kolben 12 aus dem Zylindergehäuse 10 herausgeschoben. Bei unbetätigter Handbremse, also bei Anliegen des Hebels 16 am Anschlag 40 , drehen sich die Klemmhülse 22 und die Nachstellmutter 24 frei auf der Spindel 20. Die Drehung erfolgt weitgehend reibungsfrei, es sind nur die geringfügigen Reibungen der Wälzlager 52 und 58, der Gewinde 26, 27 und 28, 29 sowie die Reibung zwischen der Nachstellmutter 24 und dem Stössel 18 zu überwinden. Um das Reibungsmoment zwischen der Nachstellmutter 24 und dem Stössel 18 gering zu halten, ist die Stirnfläche 19 der Nachstellmutter ballig ausgeformt. Bei hyraulischer Betätigung des Kolbens 12 wird also die Axial-Stellung der Nachstellvorrichtung und des Stössels 18 nicht verändert.

Wird die Handbremse betätigt, also der Hebel 16 in Richtung des Pfeiles 44 verschwenkt, so wird eine in Fig. 1 nach links gerichtete Kraft über das Druckstück 36 und den Stössel 18 auf die Nachstellmutter 24 ausgeübt. Die Nachstellmutter 24 dreht sich frei auf dem Gewinde 28 und schliesst die Konuskupplung 25. Die Klemmhülse 22 versucht ebenfalls zu drehen, ist jedoch durch das hohe Reibmoment der Konuskupplung 25 daran gehindert. Somit bewegen sich die Nachstellmutter und die Klemmhülse zusammen mit der Spindel 20 und dem Kolben 12 als eine Einheit in Fig. 1 nach links.

Nach dem Lösen der mechanischen Bremse wird der Hebel 16 wieder gegen den Anschlag 40 gezogen und die Feder 48 drückt die Klemmhülse 22 wieder in ihre Ausgangsstellung zurück. Die Wellfeder 60 öffnet die Konuskupplung 25, so dass der Kolben 12 wieder frei bewegbar ist.

Sowohl nach einer hydraulischen als auch einer mechanischen Bremsbetätigung ändert sich die axiale Relativ-Stellung der Klemmhülse 22 und der Nachstellmutter 24 nicht, das vorgegebene Kupplungsspiel bleibt also erhalten.

Fig. 2 zeigt schematisch die Ausformung der linksgängigen und der rechtsgängigen Gewinde 26 bzw. 28. Durch das Überschneiden der Gewinde bleiben nur die Flächen 30 mit den tragenden Flanken 66 stehen.

### Patentansprüche

1. Bremsbetätigungsvorrichtung mit einem Zylindergeäuse (10), in dem ein hyraulisch betätigbarer Kolben (12) und ein mechanisch betätigbarer Stössel (18) geführt sind, zwischen denen zu Übertragung einer mechanischen Betätigungskraft eine Nachstellvorrichtung angeordnet ist, welche eine Spindel (20) und zwei je für sich selbsthemmungsfreie, voneinander veschiedene Gewindepaarungen (26, 27; 28, 29) sowie eine Kuppung (25) aufweist, die bei Betätigung des Stössels zur Anlage kommt und dabei die Drehung der Gewindepaarungen verhindert, dadurch gekennzeichnet, dass auf oder in der Spindel (20) zwei einander schneidende Gewinde (26, 28) ausgeformt sind, auf oder in welche eine Nachstellmutter (24) bzw. eine Klemmhülse (22) geschraubt sind, und dass die Kupplung (25) durch die Nachstellmutter (24) und die Klemmhülse (22) gebildet wird.

2. Bremsbetätigungsvorrichtung nach Anspruch 1, dadurch gekennzeichnet, dass von den zwei Gewinden (26, 28) das eine rechtsgängig und das andere linksgängig ist.

3. Bremsbetätigungsvorrichtung nach Ansprüche 1 oder 2, dadurch gekennzeichnet, dass die Kupplung (25) als Konuskupplung ausgebildet ist, wobei die Klemmhülse (22) die Nachstellmutter (24) zumidest teilweise umschliesst.

4. Bremsbetätigungsvorrichtung nach einem der vorhergehenden Ansprüche, dadurch gekennzeichnet, dass die Nachstellmutter (24) die Spindel (20) an deren dem Stössel (18) zugekehrten Ende haubenartig umschliesst und mit ihrer Stirnfläche (19) am Stössel (18) anliegt.

5. Bremsbetätigungsvorrichtung nach Anspruch 4, dadurch gekennzeichnet, dass die Stirnfläche (19) der Nachstellmutter (24) und/oder die Stirnfläche des Stössels (18) ballig ausgeformt ist bzw. sind.

6. Bremsbetätigungsvorrichtung nach einem der vorhergehenden Ansprüche, dadurch gekennzeichnet, dass ein Kupplungsspiel bei fehlender Belastung durch den Stössel (18) durch eine axial zwischen der Klemmhülse (22) und der Nachstellmutter (24) wirkende Feder (60) erzeugt ist.

7. Bremsbetätigungsvorrichtung nach einem der vorhergehenden Ansprüche, dadurch gekennzeichnet, dass die Klemmhülse (22) und/oder die Nachstellmutter (24) axial durch ein Kugellager (52; 58) abgestützt ist bzw. sind.

### Claims

1. A brake actuator, comprising a cylinder casing (10) in which an hydraulically operable piston (12) and a mechanically operable tappet (18) are guided between which there is arranged an adjustment device for transmitting a mechanical actuating force and including a spindle (20) and two different screw thread pairs (26, 27; 28, 29) each being of non-self-locking type, and a coupling (25) being engaged upon actuation of the tappet to prevent rotation of the screw thread pairs, characterized in that two intersecting threads (26, 28) are formed on or in the spindle (20) and an adjusting nut (24) and a collet (22), respectively, are threaded on or into said threads, and in that the coupling (25) is formed by the adjusting nut (24) and the collet (22).

2. The brake actuator as claimed in claim 1, characterized in that one of the two threads (26, 28) is a right-hand thread and the other one a left-hand thread.

3. The brake actuator as claimed in claim 1 or 2, characterized in that the coupling (25) is formed as a conical coupling, the collet (22) at least partly enclosing the adjusting nut (24).

4. The brake actuator as claimed in one of the preceding claims, characterized in that the adjusting nut (24) encloses the spindle (20) in the manner of a cap at the end thereof facing the tappet (18) and abuts against the tappet (18) by its end face (19).

5. The brake actuator as claimed in claim 4, characterized in that the end face (19) of the adjusting nut (24) and/or the end face of the tappet (18) is/are crowned.

6. The brake actuator as claimed in one of the preceding claims, characterized in that a spring (60) acting axially between the collet (22) and the adjusting nut (24) provides clearance of the coupling in the absence of any loading by the tappet (18).

7. The brake actuator as claimed in one of the preceding claims, characterized in that the collet (22) and/or the adjusting nut (24) is/are axially supported by a ball bearing (52; 58).

### Revendications

1. Dispositif d'actionnement de frein comportant un carter cylindrique (10), dans lequel sont guidés un piston (12) pouvant être actionné hyrauliquement et un poussoir (18) pouvant être actionné mécaniquement, entre lesquels il est prévu, pour la transmission d'une force mécanique d'actionnement, un dispositif d'adaption, qui comporte une broche (20), deux paires de filetages (26, 27; 28, 29) différentes l'une de l'autre et respectivement exemptes d'irréversibilité, ainsi qu'un accouplement (25), qui entre en butée lors de l'actionnement du poussoir et empêche alors la rotation des paires de filetage, caractérisé en ce que sur ou dans la broche (20), sont formés deux filetages (26, 28) se coupant mutuellement et sur ou dans lesquels est vissé un écrou d'adaption (24) ou bien un manchon de blocage (22) et en ce que l'accouplement (25) et constitué par l'écrou d'adaption (24) et le manchon de blocage (22).

2. Dispositif d'actionnement de frein selon la revendication 1, caractérisé en ce que, en ce qui concerne les deux filetages (26, 28), l'un est à pas à droite et l'autre à pas à gauche.

3. Dispositif d'actionnement de frein selon une des revendications 1 ou 2, caractérisé en ce que l'accouplement (25) est agencé comme un accouplement conique, le manchon de blocage (22) entourant au moins partiellement l'écrou d'adaption (24).

4. Dispositif d'actionnement de frein selon une des revendications précédentes, caractérisé en ce que l'écrou d'adaption (24) entoure la broche (20) en forme de capot à son extrémité dirigée vers le poussoir (18) et vient s'appliquer par sa surface frontale (19) contre le poussoir (18).

5. Dispositif d'actionnement de frein selon la revendication 4, caractérisé en ce que la surface frontale (19) de l'écrou d'adaption (24) et/ou la surface frontale du poussoir (18) est/sont pourvue(s) d'un profil sphérique.

6. Dispositif d'actionnement de freins selon une des revendications précédentes, caractérisé en ce qu'un jeu d'accouplement, lors d'une absence de sollicitation par le poussoir (18), est produit par un ressort (60) agissant axialement entre le manchon de blocage (22) et l'écrou d'adaption (24).

7. Dispositif d'actionnement de frein selon une des revendications précédentes, caractérisé en ce que le manchon de blocage (22) et/ou l'écrou d'adaption (24) est/sont soutenu(s) axialement par un roulement à billes (52; 58).

FIG.1

FIG.2

0 182 336